# EUROPÄISCHE PATENTSCHRIFT

(11) **EP 2 500 216 B1**
(45) Veröffentlichungstag und Bekanntmachung des Hinweises auf die Patenterteilung: **04.06.2014**
(21) Anmeldenummer: 12001048.3
(22) Anmeldetag: 17.02.2012
(51) Int. Cl.: B60R 11/04

(54) **Verfahren und Vorrichtung für ein bildgebendes Fahrerassistenzsystem**
Method and device for images for a driver assistance system
Procédé et dispositif pour un système d'assistance au conducteur produisant des images

(30) Priorität: 17.03.2011 DE 102011014368
(43) Veröffentlichungstag der Anmeldung: 19.09.2012
(73) Patentinhaber: DSP-Weuffen GmbH, 88239 Wangen (DE)
(72) Erfinder: Beuschel, Ralf, 88239 Wangen (DE)
(74) Vertreter: Riebling, Peter

(56) Entgegenhaltungen:
- EP-A1- 2 077 667
- EP-A2- 1 302 365
- US-A1- 2003 021 490

## Beschreibung

### Stand der Technik

Im Bereich der Fahrzeugtechnik werden vermehrt Kameras eingesetzt um den Fahrer in verschiedenen Fahrsituationen zu unterstützen. In der Klasse der bildgebenden Systeme haben sich bereits Rückfahrkameras etabliert, die insbesondere in Einparksituationen das Unfallrisiko reduziert.

Ein bildgebendes Fahrerassistenzsystem nach dem Oberbegriff von Anspruch 1 wird in der US 2003/0021490 offenbart.

Die Rückfahrkamera wird in der Regel am Heck des Fahrzeugs angebracht, wie beispielsweise in DE 10342971 A1 beschrieben. Das Kamerabild wird meistens ohne weitere Verarbeitung oder mit Einparkhilfslinien zur Darstellung gebracht.

Sowohl im PKW- als auch im Nutzfahrzeugbereich werden inzwischen Rundumsichtsysteme verwendet, die vier oder mehr Kameras mit großem Erfassungsbereich verwenden um das Umfeld des Fahrzeugs aufzunehmen. Um diese Funktion zu erfüllen werden die Kameras mit Weitwinkelobjektiven oder speziellen Spiegeln ausgestattet, wobei die die Rohbilder in eine für den Fahrer brauchbare Darstellung transformiert werden müssen. Eine verbreitete Darstellungsform stellt die virtuelle Draufsicht in der Art einer Vogelperspektive dar, die dem Fahrer eine gute Orientierung im Nahbereich des Fahrzeugs ermöglicht wie beispielsweise in DE 60003750 T2 beschrieben.
Da die Anzeigeeinheiten im Fahrzeug recht klein sind, muss bei der Darstellung der Vogelperspektive ein Kompromiss zwischen der Größe des um das Fahrzeug dargestellten Bereichs und der Bildauflösung getroffen werden. Wenn der dargestellte Bereich zu groß gewählt wird, können Details wegen der unzureichenden Auflösung nicht mehr angezeigt werden. Bei Pkws wird häufig nur ein Bereich von ca. 2 bis 3 Metern um das Fahrzeug dargestellt.

Der Nachteil dieser Darstellungsform besteht darin, dass entfernte Objekte überhaupt nicht angezeigt werden, obwohl sie von den Kameras erfasst wurden. Daher hat der Benutzer Probleme sich in der Umgebung zu orientieren, beispielsweise wenn bei einer Rückwärtsfahrt ein 5 m entferntes Garagentor angefahren werden muss, welches außerhalb des Darstellungsbereiches der Vogelperspektivendarstellung liegt. Aus diesem Grund wird häufig die Vogelperspektivendarstellung mit einer zweiten Darstellung in der Perspektive einer Rückfahrkamera kombiniert, wobei das Rückfahrkamerabild aus der Bildinformation einer der Kameras des Rundumsichtsystems berechnet wird.

### Beschreibung der Erfindung

Einer der Nachteile der bekannten Verfahren besteht in der wenig zufriedenstellenden Detailauflösung der Anzeigeeinheit, da bei einer Rückwärtsfahrt immer der gesamte Erfassungsbereich der Rückfahrkamera angezeigt wird. Da die Anzeigeeinheiten im Fahrzeug bedingt durch den beschränkten Bauraum recht klein sind, können kleine Objekte nur unzureichend abgebildet werden.

Der Erfindung liegt deshalb die Aufgabe zugrunde, die Auflösung der Anzeigeeinheit bei Rückfahrtsfahrt zu verbessern.

Die Aufgabe wird durch die technische Lehre der unabhängigen Ansprüche 1 und 11 gelöst.

Entsprechend dem vorgeschlagenen Verfahren soll daher der zur Anzeige gebrachte Bildausschnitt einer Rückfahrkamera anhand der berechneten Bewegungsrichtung des Fahrzeuges dynamisch verändert werden.

Wesentliches Merkmal der Erfindung ist, dass die Bildverarbeitungseinheit eine Information über den aktuellen Lenkwinkel des Fahrzeugs erhält und den Bildausschnitt, der auf der Anzeigeeinheit dargestellt wird, dynamisch an den Lenkwinkel anpasst.

Der dargestellte Bildausschnitt stellt dabei den Bildbereich in einer vergrößerten Ansicht dar, auf den sich das Fahrzeug entsprechend der berechneten Bewegungsrichtung zu bzw. fort bewegt. Zur Berechnung der Bewegungsrichtung wird mindestens eine Lenkwinkelinformation verwendet wobei die Genauigkeit der Berechnung durch zusätzliche Parameter wie Geschwindigkeit und Fahrzeuggeometrie verbessert wird.

Hierbei wird eine Bildausschnittberechnungseinheit verwendet. Es wird überdies eine gekrümmte virtuelle Projektionsfläche verwendet, die vorzugsweise senkrecht zur Fahrbahnebene ausgerichtet ist. Damit wird die Übersichtlichkeit verbessert.

Zur weiteren Verbesserung werden eines oder mehrere Kamerabilder entsprechend ihrer geometrischen Anordnung am Fahrzeug auf einer virtuellen Projektionsfläche angeordnet.

Die Erfindung sieht auch vor, dass eine Verzerrungskorrektur für eine Weitwinkeloptik verwendbar ist.

Ferner kann anhand einer Fahrtrichtungsinformation automatisch zwischen einer Vorderansicht und einer Rückansicht umgeschaltet werden.

Ein Zylinder mit annähernd elliptischer Grundfläche der das Fahrzeug senkrecht zur Fahrbahnebene umgibt, wird als virtuelle Projektionsfläche verwendet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:
- Figur 1:: Typische Anordnung der Kameras im Fahrzeug
- Figur 2:: Prinzip der virtuellen Projektionsfläche (Draufsicht)
- Figur 3:: Prinzip der virtuellen Projektionsfläche (Seitenansicht)
- Figur 4:: Übersicht über das Bildverarbeitungssystem
- Figur 5:: Definition der Bewegungsrichtungsinformation
- Figur 6:: Bestimmung des darzustellenden Bildausschnitts, beispielhaft für eine Rückwärtsfahrt nach links.

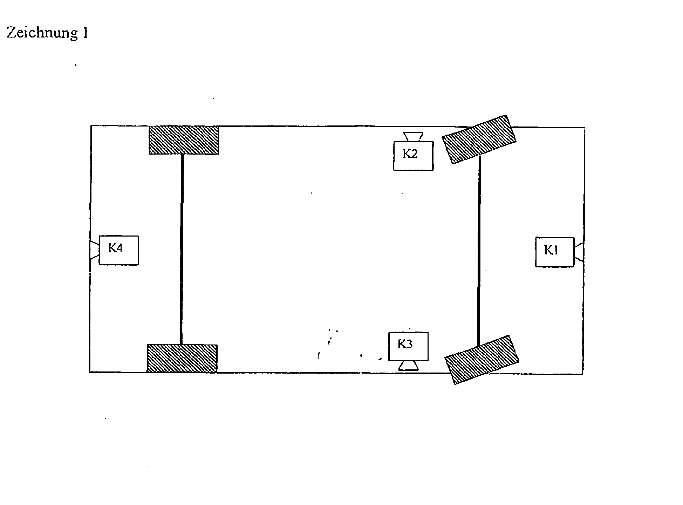

In Figur 1 ist eine mögliche Anordnung der Kameras am Fahrzeug dargestellt. In der bevorzugten Implementierung werden 4 Kameras verwendet, das beschriebene Verfahren kann aber generell mit 1 bis N Kameras implementiert werden. Werden zu wenige Kameras verwendet, steht in bestimmten Situationen keine Bildinformation zur Verfügung und der entsprechende Bildbereich wird beispielsweise mit schwarz oder einer Warnmarkierung gefüllt.

In der bevorzugten Implementierung sind Kamera 1 (K1) beispielsweise im Kühlergrill und Kamera 4 (K4) in der Heckklappe eingebaut. Kamera 2 (K2) auf der linken Seite und Kamera 3 (K3) auf der rechten Seite sind jeweils auf der Höhe der Fahrzeugaußenspiegel montiert. Die Kombination aus Montageposition und Optik der Kameras ermöglicht eine Rundumsicht um das Fahrzeug. In der bevorzugten Implementierung ist der vertikale Erfassungsbereich der Kameras so ausgelegt, dass der gesamte Bereich von der Unterkannte des Fahrzeugrahmens bis zum Horizont aufgenommen wird.

Der horizontale Erfassungsbereich jeder Kamera beträgt ca. 180°, daher überlappen sich die Erfassungsbereiche der Kameras teilweise.

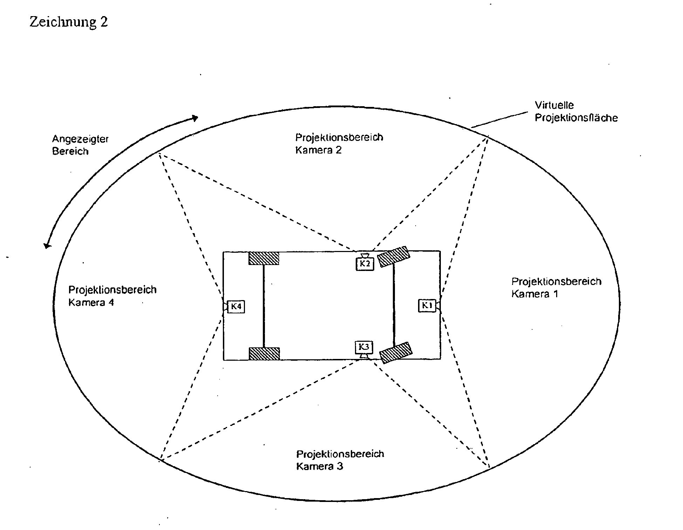

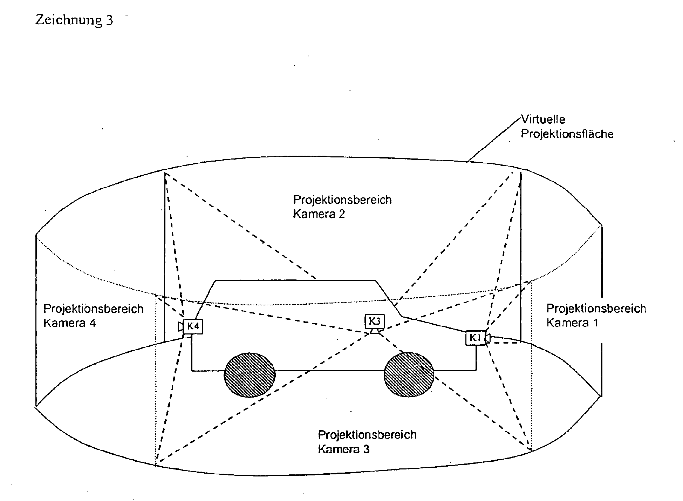

Das Prinzip der Bilderzeugung ist in Figur 2 und 3 dargestellt. Für die Generierung der Bildansicht wird ein dreidimensionales Modell einer virtuellen Projektionsfläche verwendet. In der Implementierung hat diese Projektionsfläche näherungsweise die Form eines senkrechten Zylinders mit elliptischem Querschnitt, welcher das Fahrzeug in einer definierten Distanz einschließt. Die Projektionsfläche wird in 4 Teile geteilt, deren Bildinhalte jeweils mit den Bilddaten der entsprechenden Kamera texturiert werden. Mittels der bekannten optischen Parameter der Kameras und ihrer Montagepositionen im Fahrzeug wird jeweils eine Rückprojektion des aufgenommenen Bildes auf die virtuelle Projektionsebene berechnet. Auf dieser Projektionsfläche werden senkrechte Objekte senkrecht und mit wenigen Verzerrungen abgebildet. Auf der Anzeigeeinheit wird ein Ausschnitt dieser virtuellen Projektionsfläche dargestellt, der in Figur 2 beispielhaft für eine Rückwärtsfahrt nach links dargestellt ist.

In Abhängigkeit von der berechneten Bewegungsrichtung des Fahrzeuges wird der Bereich der virtuellen Projektionsfläche ausgewählt, der auf der Anzeigeeinheit dargestellt wird. Der dargestellt Bildausschnitt wird dynamisch so angepasst, dass der Benutzer jederzeit den Bereich um das Fahrzeug sieht auf den sich das Fahrzeug zu bewegt bzw. von dem es sich fort bewegt So entsteht eine für den Betrachter verständliche und leicht zu erfassende Darstellung der Fahrzeugumgebung.

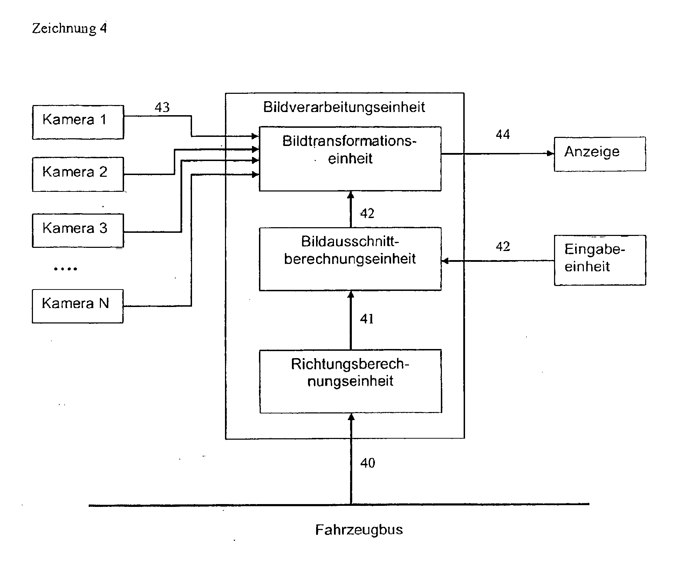

Die Erzeugung der beschriebenen Bildansicht erfolgt mit dem in Figur 4 dargestellten Bildverarbeitungssystem. Die Bilddaten 43 mindestens einer Kamera werden in die Bildverarbeitungseinheit eingespeist. Die Bildverarbeitungseinheit empfängt außerdem mindestens eine Lenkwinkelinformation 40 vom Fahrzeugbus.

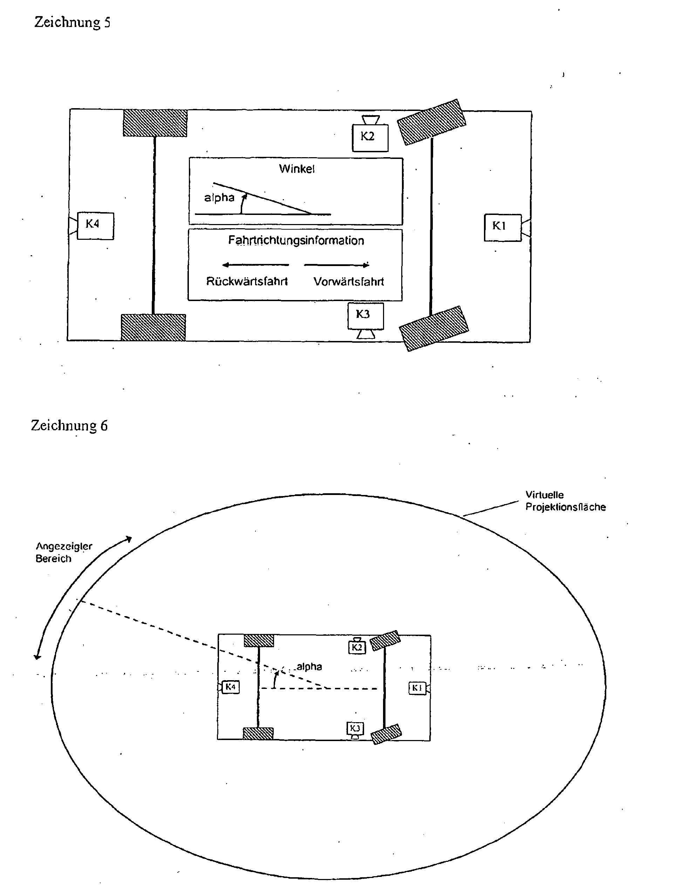

Die Richtungsberechnungseinheit berechnet aus mindestens einer Lenkwinkelinformation 40 eine Bewegungsrichtungsinformation 41 für das Fahrzeug. Die Bewegungsrichtungsinformation besteht aus mindestens einem Winkel alpha und einer Fahrtrichtungsinformation (Figuren 5 und 6).

Der Winkel alpha beschreibt die Abweichung der Bewegungsrichtung von der Geradeausrichtung des Fahrzeugs wie in Figuren 5 und 6 dargestellt. Zur Erhöhung der Genauigkeit der Winkelberechnung können weitere Informationen wie die Geschwindigkeit und die Fahrzeuggeometrie mit in die Berechnung einbezogen werden.

Die Fahrtrichtungsinformation beschreibt die momentane Fahrtrichtung des Fahrzeugs und kann die Zustände "Vorwärtsfahrt" und "Rückwärtsfahrt" annehmen. In einer ersten bevorzugten Implementierung wird die Fahrtrichtungsinformation konstant auf den Wert "Rückwärtsfahrt" gesetzt und die Eingabeeinheit entfällt. In einer zweiten bevorzugten Implementierung wird die Fahrtrichtungsinformation beispielsweise aus der Schalthebelstellung oder den Kamerabildern bestimmt.

Die Bildausschnittberechnungseinheit ermittelt den Bereich der virtuellen Projektionsfläche der von der Anzeigeeinheit dargestellt werden soll. Sie verwendet die Bewegungsrichtungsinformation 41 sowie die bekannten Geometriedaten des Fahrzeugs und der virtuellen Projektionsfläche, um eine Bildausschnittinformation 42 zu berechnen. Die Bildausschnittinformation wird derart berechnet, dass der dargestellte Bildausschnitt die Umgebung anzeigt auf die sich das Fahrzeug zu oder fort bewegt. Das Verfahren ist beispielhaft für eine Rückwärtsfahrt mit Lenkeinschlag nach links in Figur 6 illustriert.

Die Bildausschnittberechnungseinheit verarbeitet außerdem eine Betriebsartinformation die der Fahrzeugführer über eine Eingebeeinheit einstellen kann. Die Eingebeeinheit kann wie in Figur 4 dargestellt direkt an die Bildverarbeitungseinheit angeschlossen sein, die Betriebsartinformation kann aber auch über den Fahrzeugbus bereitgestellt werden. Die Ausführung der Eingebeeinheit kann beispielhaft durch Schalter oder eine Spracheingabe erfolgen.

In einer ersten Betriebsart wird die Fahrtrichtungsinformation konstant auf "Rückwärtsfahrt" gesetzt. Die Bildausschnittberechnungseinheit ermittelt in diesem Fall immer den Bildausschnitt im hinteren Bereich des Fahrzeugs auf den es sich bei einer Rückwärtsfahrt zu bewegt und von dem es sich bei einer Vorwärtsfahrt fort bewegt. Diese Betriebsart ist besonders hilfreich beim rückwärts Einparken.

In einer zweiten Betriebsart wird die Fahrtrichtung konstant auf "Vorwärtsfahrt" gesetzt. Die Bildausschnittberechnungseinheit ermittelt in diesem Fall immer den Bildausschnitt im vorderen Bereich des Fahrzeugs auf den es sich bei einer Vorwärtsfahrt zu bewegt und von dem es sich bei einer Rückwärtsfahrt fort bewegt. Diese Betriebsart ist besonders hilfreich beim Ausparken.

In einer dritten Betriebsart wird die Fahrtrichtungsinformation von der Bewegungsrichtungseinheit verwendet um automatisch zwischen der vorderen und hinteren Ansicht zu wechseln. Erhält die Bildausschnittberechnungseinheit von der Richtungsberechnungseinheit ein "Rückwärtsfahrt" Signal, so wird ein Bildausschnitt im hinteren Bereich des Fahrzeugs ausgewählt auf den sich das Fahrzeug rückwärts zu bewegt. Erhält die Bildausschnittberechnungseinheit ein "Vorwärtsfahrt" Signal, so wird ein Bildausschnitt im vorderen Bereich des Fahrzeugs ausgewählt auf den sich das Fahrzeug vorwärts zu bewegt. In dieser Betriebsart wird dem Fahrer immer genau der Bildbereich angezeigt, auf den sich das Fahrzeug momentan zu bewegt.

In der bevorzugten Implementierung der Bildausschnittberechnungseinheit wird mindestens eine der drei genannten Betriebsarten implementiert.

Die Bildtransformationseinheit empfängt die Kameradaten 43 sowie die Bildausschnittinformation 42 und führt die Berechnungen zur Erzeugung der Bildausgabeinformation 44 durch. Die Bildtransformationseinheit erhält von jeder Kamera eine zeitliche Abfolge von Bildern und berechnet jeweils aus den zeitlich zusammen gehörigen N Bildern die Darstellung auf der virtuellen Projektionsfläche entsprechend den Figuren 2 und 3. In einem zweiten Schritt wird der darzustellende Bildbereich entsprechend der Bildausschnittsinformation 42 extrahiert und die Bildinformation 44 wird and die Anzeigeeinheit ausgegeben.

Eine Besonderheit der Erfindung besteht in der Verwendung mehrerer Kamerabilder zur Generierung der Bildinformation. Wie in Figur 2 dargestellt kann es bei bestimmten Lenkwinkeln vorkommen, dass die Bildinformation einer Kamera nicht ausreicht um die Bildansicht aus einem Kamerabild zu generieren. In diesem Fall stellt das innovative Bilderzeugungsverfahren Bildausschnitte von zwei Kameras entsprechend ihrer geometrischen Anordnung am Fahrzeug nebeneinander dar. Entsprechend dem aktuellen Lenkwinkel verschiebt sich das Verhältnis der beiden dargestellten Bildausschnitte dynamisch, so dass der Benutzer immer ein aussagekräftiges Bild der Umgebung erhält. Der Übergang zwischen zwei Kameras kann dabei durch eine Überblendung fließend, oder durch einen harten Übergang mit einer optionalen Markierung erfolgen.

## Patentansprüche

1. Bildgebendes Fahrerassistenzsystem bestehend aus mindestens einer Kamera (K1 - K4), einer Bildverarbeitungseinheit, einer Anzeigeeinheit, und einer Bildausschnittberechnungseinheit, wobei für die Generierung der Bildansicht ein dreidimensionales Modell einer gekrümmten virtuellen Projektionsfläche verwendet wird, welche das Fahrzeug in einer definierten Distanz einschließt und das Fahrzeug senkrecht zur Fahrbahnebene umgibt, wobei mittels der bekannten optischen Parameter der Kameras (K1 - K4) und ihrer Montagepositionen im Fahrzeug jeweils eine Rückprojektion des aufgenommenen Bildes auf die virtuelle Projektionsebene berechnet wird,
**dadurch gekennzeichnet, dass** die Bildverarbeitungseinheit eine Information (40) über den aktuellen Lenkwinkel (Alpha) des Fahrzeugs erhält und den Bildausschnitt, der auf der Anzeigeeinheit dargestellt wird dynamisch an den Lenkwinkel anpasst, wobei der dargestellte Bildausschnitt den Bildbereich in einer vergrößerten Ansicht darstellt, auf den sich das Fahrzeug entsprechend der berechneten Bewegungsrichtung zu- bzw. fortbewegt, und dass zur Berechnung der Bewegungsrichtung mindestens eine Lenkwinkelinformation (40) verwendet wird, wobei die Genauigkeit der Berechnung durch zusätzliche Parameter wie Geschwindigkeit und Fahrzeuggeometrie verbessert wird.

2. Fahrassistenzsystem nach Anspruch 1, **dadurch gekennzeichnet, dass** in Abhängigkeit von der berechneten Bewegungsrichtung des Fahrzeuges der Bereich der virtuellen Projektionsfläche ausgewählt wird, der auf der Anzeigeeinheit dargestellt wird.

3. Fahrassistenzsystem nach Anspruch 1, **dadurch gekennzeichnet, dass** die Projektionsfläche wird in vier Teile geteilt wird, deren Bildinhalte jeweils mit den Bilddaten der entsprechenden Kamera texturiert werden.

4. Bildgebendes Fahrerassistenzsystem nach einem der Ansprüche 1 bis 3, **dadurch gekennzeichnet, dass** eine Verzerrungskorrektur für eine Weitwinkeloptik verwendbar ist.

5. Bildgebendes Fahrerassistenzsystem nach einem der Ansprüche 1 bis 4, **dadurch gekennzeichnet, dass** anhand einer Fahrtrichtungsinformation automatisch zwischen einer Vorderansicht und einer Rückansicht umschaltbar ist.

6. Bildgebendes Fahrerassistenzsystem nach einem der Ansprüche 1 bis 5, **dadurch gekennzeichnet, dass** ein Zylinder mit annähernd elliptischer Grundfläche der das Fahrzeug senkrecht zur Fahrbahnebene umgibt als virtuelle Projektionsfläche verwendbar ist.

7. Bildgebendes Fahrerassistenzsystem nach einem der vorher gehenden Ansprüche, **dadurch gekennzeichnet, dass** eines oder mehrere Kamerabilder zur Erzeugung der Bildinformation verwendet worden sind und diese entsprechend ihrer geometrischen Anordnung auf der virtuellen Projektionsfläche angeordnet worden sind.

8. Fahrassistenzsystem nach einem oder mehreren der vorangegangen Ansprüche, **dadurch gekennzeichnet, dass** die Bildausschnittberechnungseinheit den Bereich der virtuellen Projektionsfläche der von der Anzeigeeinheit dargestellt ist, ermittelt und hierbei die Bewegungsrichtungsinformation (41), sowie die bekannten Geometriedaten des Fahrzeugs verwendet, um eine Bildausschnittinformation (42) zu berechnen.

9. Fahrassistenzsystem nach einem oder mehreren der vorangegangen Ansprüche, **dadurch gekennzeichnet, dass** die Bildausschnittinformation derart berechnet wird, dass der dargestellte Bildausschnitt die Umgebung anzeigt auf die sich das Fahrzeug zu oder fort bewegt.

10. Fahrassistenzsystem nach einem oder mehreren der vorangegangen Ansprüche, **dadurch gekennzeichnet, dass** die Bildausschnittberechnungseinheit eine Betriebsartinformation verarbeitet, die der Fahrzeugführer über eine Eingebeeinheit eingibt.

11. Verfahren für den Betrieb eines Fahrassistenzsystems nach einem oder mehreren der vorangegangen Ansprüche, **dadurch gekennzeichnet, dass** in einem ersten Verfahrensschritt die Bildtransformationseinheit die Kameradaten (43) sowie die Bildausschnittinformation (42) empfängt und die Berechnungen zur Erzeugung der Bildausgabeinformation (44) durchführt, wobei die Bildtransformationseinheit von jeder Kamera eine zeitliche Abfolge von Bildern erhält und jeweils aus den zeitlich zusammen gehörigen N Bildern die Darstellung auf der virtuellen Projektionsfläche berechnet und dass in einem zweiten Verfahrensschritt der darzustellende Bildbereich entsprechend der Bildausschnittsinformation (42) extrahiert und die Bildinformation (44) wird and die Anzeigeeinheit ausgegeben wird.

12. Verfahren für den Betrieb eines Fahrassistenzsystems nach einem oder mehreren der vorangegangen Ansprüche, **dadurch gekennzeichnet, dass** falls die Bildinformation einer Kamera nicht ausreicht, um die Bildansicht aus einem Kamerabild zu generieren, das Bilderzeugungsverfahren Bildausschnitte von zwei Kameras entsprechend ihrer geometrischen Anordnung am Fahrzeug nebeneinander darstellt.

13. Verfahren für den Betrieb eines Fahrassistenzsystems nach Anspruch 12, **dadurch gekennzeichnet, dass** entsprechend dem aktuellen Lenkwinkel sich das Verhältnis der beiden dargestellten Bildausschnitte dynamisch verschiebt.

## Claims

1. Imaging driver assistance system consisting of at least one camera (K1 - K4), an image processing unit, a display unit, and an image detail calculation unit, a three-dimensional model of a curved virtual projection surface being used to generate the image view, said projection surface enclosing the vehicle at a defined distance and surrounding the vehicle perpendicular to the road plane, a back projection of the recorded image onto the virtual projection plane being calculated in each case by means of the known optical parameters of the cameras (K1 - K4) and their assembly positions in the vehicle, **characterised in that** the image processing unit receives information (40) about the current steering angle (alpha) of the vehicle and dynamically adapts the image detail, which is shown on the display unit, to the steering angle, the image detail shown showing the image region in an enlarged view, which the vehicle is moving toward or away from in accordance with the calculated movement direction and **in that** to calculate the movement direction, at least one piece of steering angle information (40) is used, the precision of the calculation being improved by additional parameters such as speed and vehicle geometry.

2. Driver assistance system according to claim 1, **characterised in that** depending on the calculated movement direction of the vehicle, the region of the virtual projection surface, which is shown on the display unit, is selected.

3. Driver assistance system according to claim 1, **characterised in that** the projection surface is divided into four parts, the image contents of which are in each case textured with the image data of the corresponding camera.

4. Imaging driver assistance system according to any one of claims 1 to 3, **characterised in that** a distortion correction can be used for a wide angle optical system.

5. Imaging driver assistance system according to any one of claims 1 to 4, **characterised in that** a switch can automatically be made between a front view and a rear view with the aid of travel direction information.

6. Imaging driver assistance system according to any one of claims 1 to 5, **characterised in that** a cylinder with an approximately elliptical base area, which surrounds the vehicle perpendicularly to the road plane, can be used as the virtual projection surface.

7. Imaging driver assistance system according to any one of the preceding claims, **characterised in that** one or more camera images have been used to produce the image information and these have been arranged in accordance with their geometric arrangement on the virtual projection surface.

8. Driver assistance system according to any one or more of the preceding claims, **characterised in that** the image detail calculation unit determines the region of the virtual projection surface shown by the display unit and thus uses the movement direction information (41) and the known geometric data of the vehicle in order to calculate image detail information (42).

9. Driver assistance system according to any one or more of the preceding claims, **characterised in that** the image detail information is calculated in such a way that the image detail shown displays the surroundings, which the vehicle is moving toward or away from.

10. Driver assistance system according to any one or more of the preceding claims, **characterised in that** the image detail calculation unit processes operating mode information, which the vehicle driver inputs by means of an input unit.

11. Method for operating a driver assistance system according to any one or more of the preceding claims, **characterised in that**, in a first method step, the image transformation unit receives the camera data (43) and the image detail information (42) and carries out the calculations to produce the image output information (44), the image transformation unit receiving a time sequence of images from each camera and in each case calculating the display on the virtual projection surface from the N images belonging together with respect to time, and **in that** in a second method step, the image region to be shown is extracted in accordance with the image detail information (42) and the image information (44) is output to the display unit.

12. Method for operating a driver assistance system according to any one or more of the preceding claims, **characterised in that** if the image information of one camera is not sufficient to generate the image view from one camera image, the image production method shows image details from two cameras in accordance with their geometric arrangement on the vehicle next to one another.

13. Method for operating a driver assistance system according to claim 12, **characterised in that** the ratio of the two image details shown is dynamically displaced in accordance with the current steering angle.

## Revendications

1. Système d'assistance au conducteur par imagerie, composé d'au moins une caméra (K1-K4), d'une unité de traitement d'image, d'une unité d'affichage et d'une unité de calcul de détail d'image, étant précisé que pour produire la vue d'image est utilisé un modèle à trois dimensions d'une surface de projection virtuelle courbe qui contient le véhicule sur une distance définie et qui entoure le véhicule perpendiculairement au plan de la chaussée, étant précisé qu'à l'aide des paramètres optiques des caméras (K1-K4) qui sont connus et de leurs positions de montage dans le véhicule est calculée une rétroprojection de l'image prise, sur le plan de projection virtuel,
**caractérisé en ce que** l'unité de traitement d'image reçoit une information (40) sur l'angle de braquage du moment (Alpha) du véhicule, et adapte dynamiquement à cet angle de braquage le détail d'image qui est représenté sur l'unité d'affichage, étant précisé que le détail d'image représenté représente sur une vue agrandie la zone d'image de laquelle le véhicule s'approche ou s'éloigne, selon le sens de déplacement calculé, et **en ce que** pour le calcul du sens de déplacement est utilisée au moins une information d'angle de braquage (40), étant précisé que la précision du calcul est améliorée par des paramètres supplémentaires tels que la vitesse et la géométrie du véhicule.

2. Système d'assistance au conducteur selon la revendication 1, **caractérisé en ce que**, en fonction du sens de déplacement du véhicule calculé est choisie la zone de la surface de projection virtuelle qui est représentée sur l'unité d'affichage.

3. Système d'assistance au conducteur selon la revendication 1, **caractérisé en ce que** la surface de projection est divisée en quatre parties dont les contenus d'image sont texturés respectivement avec les données d'image de la caméra correspondante.

4. Système d'assistance au conducteur selon l'une des revendications 1 à 3, **caractérisé en ce qu'**une correction de distorsion pour une optique grand angle est utilisable.

5. Système d'assistance au conducteur selon l'une des revendications 1 à 4, **caractérisé en ce qu'**une information de sens de déplacement permet le passage automatique entre une vue de face et une vue arrière.

6. Système d'assistance au conducteur selon l'une des revendications 1 à 5, **caractérisé en ce qu'**un cylindre à surface de base à peu près elliptique qui entoure le véhicule perpendiculairement au plan de la chaussée est utilisable comme surface de projection virtuelle.

7. Système d'assistance au conducteur selon l'une au moins des revendications précédentes, **caractérisé en ce qu'**une ou plusieurs images de caméra ont été utilisées pour produire l'information d'image, et ces images de caméra ont été disposées suivant leur disposition géométrique sur la surface de projection virtuelle.

8. Système d'assistance au conducteur selon l'une au moins des revendications précédentes, **caractérisé en ce que** l'unité de calcul de détail d'image détermine la zone de la surface de projection virtuelle qui est représentée par l'unité d'affichage, et utilise alors l'information de sens de déplacement (41), ainsi que les données géométriques du véhicule qui sont connues, pour calculer une information de détail d'image (42).

9. Système d'assistance au conducteur selon l'une au moins des revendications précédentes, **caractérisé en ce que** l'information de détail d'image est calculée de telle sorte que le détail d'image représenté affiche l'environnement duquel le véhicule s'approche ou s'éloigne.

10. Système d'assistance au conducteur selon l'une au moins des revendications précédentes, **caractérisé en ce que** l'unité de calcul de détail d'image traite une information de type de fonctionnement que le conducteur du véhicule entre par l'intermédiaire d'une unité d'entrée.

11. Procédé pour le fonctionnement d'un système d'assistance au conducteur selon l'une au moins des revendications précédentes, **caractérisé en ce que** lors d'une première étape du procédé, l'unité de transformation d'image reçoit les données de caméra (43) ainsi que l'information de détail d'image (42) et effectue les calculs pour produire l'information de sortie d'image (44), étant précisé que l'unité de transformation d'image reçoit de chaque caméra une suite temporelle d'images et, à partir des N images qui vont ensemble, dans le temps, calcule la représentation sur la surface de projection virtuelle, et **en ce que** lors d'une seconde étape du procédé, la zone d'image à représenter est extraite suivant l'information de détail d'image (42), et l'information d'image est transmise à l'unité d'affichage.

12. Procédé pour le fonctionnement d'un système d'assistance au conducteur selon l'une au moins des revendications précédentes, **caractérisé en ce que**, au cas où l'information d'image d'une caméra n'est pas suffisante pour produire la vue d'image à partir d'une image de caméra, le procédé de production d'image représente des détails d'image de deux caméras suivant leur disposition géométrique sur le véhicule, côte à côte.

13. Procédé pour le fonctionnement d'un système d'assistance au conducteur selon la revendication 12, **caractérisé en ce que** suivant l'angle de braquage du moment, le rapport des détails d'image se déplace dynamiquement.
